# EUROPÄISCHE PATENTSCHRIFT

(11) **EP 0 317 945 B1**
(45) Veröffentlichungstag und Bekanntmachung des Hinweises auf die Patenterteilung: **20.01.1993**
(21) Anmeldenummer: 88119373.4
(22) Anmeldetag: 22.11.1988
(51) Int. Cl.: B22F 9/04, C22C 1/04

(54) **Verfahren zum Herstellen eines plastisch verformbaren keramischen oder pulvermetallurgischen Werkstoffes und unter Anwendung eines solchen Verfahrens hergestellter Gegenstand**
Process for preparing a plastically deformable ceramic or powder metallurgical material, and article prepared thereby
Procédé pour la préparation d'un matériau céramique ou la métallurgie des poudres à déformation plastique et ébauche ainsi obtenue

(30) Priorität: 25.11.1987 DE 3739959
(43) Veröffentlichungstag der Anmeldung: 31.05.1989
(73) Patentinhaber: INSTITUT FÜR NEUE MATERIALIEN GEM. GMBH, 66123 Saarbrücken (DE)
(72) Erfinder: Gleiter, Herbert, Prof. Dr., D-6600 Saarbrücken (DE); Birringer, Rainer, Dr., D-6600 Saarbrücken (DE); Karch, Jörg, D-6620 Völklingen (DE)
(74) Vertreter: Bernhardt, Winfrid, Dr.-Ing.

(56) Entgegenhaltungen:
- EP-A- 0 018 096
- EP-A- 0 288 785
- DE-A- 2 412 022
- GB-A- 1 298 944
- ZEITSCHRIFT FÜR METALLKUNDE, Band 75, Nr. 4, April 1984, Seiten 263-267, München, DE; H. GLEITER et al.: "Nanokristalline Strukturen - ein Weg zu neuen Materialien?"
- MATERIAL LETTERS, Band 5, Nr. 7-8, Juli 1987, Seiten 280-284, Elsevier Science Publishers B.V., Amsterdam, NL; F. PETZOLDT et al.: "Study of the mechanism of amorphization by mechanical alloying"
- PROCEEDINGS OF FOURTH JIM INTERNATIONAL SYMPOSIUM ON GRAIN BOUNDARY STRUCTURE AND RELATED PHENOMENA, Supplement to transactions of the Japan Institute of Metals, Band 27, 1986, Seiten 43-52, The Japan Institute of Metals, Sendai, JP; R. BIRRINGER et al.: "Nanocrystalline Materials - a first report"

## Beschreibung

Die Erfindung betrifft ein Verfahren zum Herstellen eines keramischen oder pulvermetallurgischen Werkstoffes für eine Verwendung unter Beanspruchung auf Duktilität oder Zähigkeit sowie einen unter Anwendung eines solchen Verfahrens hergestellten Gegenstand.

Hervorstechend an den Eigenschaften der keramischen Materialien - herkömmlich silikatische Materialien, in der technischen Keramik vor allem Oxide und Karbide - sind ihre hohe Korrosionsbeständigkeit und teilweise Feuerfestigkeit und Härte einerseits und ihre geringe Zähigkeit und Duktilität andererseits; die letztere ist bei Normaltemperatur praktisch gleich null. Der Mangel an Duktilität bzw. Zähigkeit, anders ausgedrückt die hohe Sprödigkeit, verbietet viele Verwendungen des keramischen Materials, die seiner anderer Eigenschaften wegen wünschenswert sind.
Nur einen kleinen Teil dieser Lücke füllt die Pulvermetallurgie, die z.B. Karbide mit duktilen, jedenfalls zäheren, Metallen verbindet. Auch einige Metalle sind spröde, besonders Wolfram und intermetallische Phasen.

In der älteren EP-Patentanmeldung 0 288 785 ist als ein Verfahren zur Herstellung bestimmter pulvermetallurgischer Werkstoffe mit einem Gefüge nanokristalliner Struktur aus binären oder quasibinären Stoffen vorgeschlagen, daß die Bestandteile in reiner Form oder als Vorlegierungen als Pulver mit Teilchengrößen von 2 bis 250 µm gemischt und zum Erreichen eines Sekundärpulvers mit nanokristalliner Struktur hohen mechanischen Kräften ausgesetzt wird. Aus dem Sekundärpulver wird heiß, aber unterhalb der Rekristallisationstemperatur ein Formkörper gepreßt. Das Problem der Duktilität und Zähigkeit ist nicht behandelt.

Der Erfindung liegt die Aufgabe zugrunde, bisher spröde keramische oder pulvermetallurgische Werkstoffe duktil zu machen.

Gemäß der Erfindung ist das dadurch möglich, daß der Werkstoff aus einem an sich spröden Material von einer Korngröße unter 30 Nanometern gesintert wird (vgl. Anspruchssätze A und B).

Weiter unten beschriebene Versuche belegen dies, sogar für niedrige Temperaturen.
Theoretisch mag sich die Wirkung damit erklären lassen, daß durch die Verringerung der Korngröße das Grenzflächennetz engmaschiger und das Grenzflächenvolumen größer wird und dadurch allein auf der Basis der Korngrenzendiffusion die Diffusionskriechrate sich in einem solchen Maße vergrößert, daß sie in die Verformbarkeit hineinführt. Der Mechanismus ist gegründet auf nicht, wie man es kennt, durch hohe Temperaturen (über 1000°) aktivierte, sondern durch Verkürzung der Diffusionswege und extreme Vermehrung der Gelegenheit vergrößerte Korngrenzendiffusion. Ferner kann in den Korngrenzen zwischen den kleineren Körnern eine erhöhte Diffusivität angenommen werden, d.h. Erleichterung des Transportes.
Dieser Einfluß überwiegt offenbar etwa unterhalb der angegebenen Grenze die sonst bekanntlich mit Kornverkleinerung verbundene Erhöhung der Festigkeit und Härte.

Es entsteht so aus einem bisher spröden ein bei Normaltemperatur duktiler Werkstoff.

So können keramische Gegenstände hergestellt werden, die als Enderzeugnisse bei ihrer Verwendung auf Duktilität oder Zähigkeit beansprucht sind, d.h. Schlag- oder Stoßbeanspruchungen, schnellen Temperaturwechseln, Zug- oder Biegebelastungen o.a. ausgesetzt sind. Pulvermetallurgische Gegenstände, die bisher schon zäher als keramische sind, können weiter in dieser Richtung verbessert werden.

Um dabei die ggf. gewünschte Härte, Abriebfestigkeit o. dgl. zu behalten, können die Gegenstände auch stellenweise aus normalem oder jedenfalls anderem keramischen oder pulvermetallurgischen Werkstoff bestehen. Dieser Teil des Gegenstands kann von vornherein zusammen mit dem übrigen, plastisch verformbaren, Teilgegenstand geformt und gesintert werden. Beispielsweise wird eine Preßform hier mit dem einen und dort mit dem anderen Material gefüllt. Es kann aber auch der Gegenstand zunächst vollständig plastisch verformbar hergestellt werden und dann teilweise einer kornvergrößernden Wärmebehandlung unterzogen werden, beispielsweise beschränkt auf eine Oberflächenschicht.

Risse in dem normalen Teil des Gegenstands setzen sich dann in dem duktilen Teil nicht fort. Der Gegenstand kann im ganzen funktionsfähig bleiben.

Ferner eröffnet die Erfindung die Möglichkeit, Gegenstände überhaupt unter plastischer Verformung herzustellen, d.h. auf dem keramischen oder pulvermetallurgischen Wege nur einen Vorkörper herzustellen und diesen dann zu pressen, zu extrudieren, zu walzen o.a.. In diesem Falle wird das Zwischenerzeugnis auf Duktilität beansprucht.

Damit lassen sich Formgebungen und Maßgenauigkeiten an Formkörpern mit gesinterter Oberfläche erzielen, die bisher nicht möglich sind.
Ein Formkörper hat bisher entweder die unverletzte Sinteroberfläche, oder er ist maßgenau. Der ursprüngliche Formling kann zwar maßgenau hergestellt werden, er schwindet dann jedoch, spätestens beim Sintern, nicht ganz gleichmäßig und verliert dadurch die Maßgenauigkeit. Diese kann nur durch anschließendes Schleifen erzielt werden, das jedoch die beim Sintern entstandene Oberflächenstruktur zerstört. Auch läßt sich an einem keramischen oder pulvermetallurgischen Werkstoff durch spanabhebende Bearbeitung nicht jegliche Oberflächen- und Körpergestalt schaffen.

Nach der Erfindung kann demgegenüber beispielsweise ein Formkörper durch Pressen maßgenau in eine komplizierte Gestalt gebracht werden, durch Extrudieren ein maßgenauer Querschnitt erreicht werden oder durch Walzen eine dünne, ggf. durchsichtige, Membran erzeugt werden, die ohne Sinterhaut keine Festigkeit hätte.

Auch die unter plastischer Verformung hergestellten Gegenstände können, wie die zuvor betrachteten, stellenweise durch eine kornvergrößernde Behandlung in einen normalen keramischen oder pulvermetallurgischen Werkstoff überführt werden oder, jedenfalls bei der Verformung durch Pressen, von vornherein mit einem aus normalem Werkstoff bestehenden Teil hergestellt sein; im letzteren Falle unterliegt dann nur der aus dem erfindungsgemäßen Werkstoff bestehende Teilgegenstand der plastischen Verformung.

Bei den der plastischen Formgebung wegen aus dem erfindungsgemäßen Werkstoff hergestellten Gegenständen oder Teilgegenständen wird jedoch auch in Betracht kommen, sie vollständig durch eine kornvergrößernde Behandlung in einen Werkstoff mit etwa herkömmlichen keramischen Eigenschaften umzuwandeln.

Um ungewolltes Kornwachstum auszuschließen, wird man die Gegenstände möglichst unterhalb einer Temperatur von 300°C, vorzugsweise unterhalb 200°C, anwenden bzw. durch Verformung herstellen oder das Material als eine stoffliche Mischung zusammenstellen, in der jeweils ein Korn möglichst weitgehend von Körnern eines anderen Stoffes oder anderer Stoffe umgeben ist und ihm infolgedessen das Material zum Wachsen fehlt.

Unter Anwendung der letzteren Maßnahme kann auch die wesentliche Erhöhung der Duktilität nutzbar gemacht werden, die sich bei Temperaturerhöhung infolge Aktivierung der Korngrenzendiffusion ergibt.

Material von der betreffenden Korngröße kann hergestellt werden durch Oxidieren eines Metalles, wie es als "nanokristallines Material" in der von Birringer, Herr und Gleiter in der in Suppl. to Trans Jap. Insti. Met. 27 (1986), 43 beschriebenen Weise herstellbar ist. Die Oxidation des abgeschiedenen Metallpulvers kann z.B. noch in der Vakuumapparatur durch langsames Einbringen von Sauerstoff erfolgen, so daß nur eine langsame, zu keiner Erhitzung und damit keinem Kornwachstum führende Reaktion stattfindet. Auch das Oxid besteht dann aus Teilchen von nur einigen Nanometern Korngröße. Das Material wird gesintert, ohne daß es der Luft ausgesetzt worden ist.

Die im folgenden beschriebenen Versuche belegen die Verformbarkeit erfindungsgemäßer Werkstoffe.

In den zugehörigen Zeichnungen zeigen
- Fig. 1: schematisch einen Teilschnitt durch eine Verformungseinrichtung,
- Fig. 2: konkret einen Fig. 1 entsprechenden Schnitt nach Durchführung einer Verformung,
- Fig. 3: einen Fig. 2 entsprechenden Schnitt nach Durchführung einer anderen Verformung,
- Fig. 4: einen Ausschnitt aus Fig. 3 in größerem Maßstab,
- Fig. 5: einen etwa Fig. 3 entsprechenden Schnitt nach gleicher Einwirkung auf einen Einkristall,
- Fig. 6: einen Vickers-Eindruck in einem erfindungsgemäßen Werkstoff,
- Fig. 7: einen anderen Vickers-Eindruck in einem erfindungsgemäßen Werkstoff und
- Fig. 8: einen Vickers-Eindruck in einem herkömmlichen polykristallinen Werkstoff.

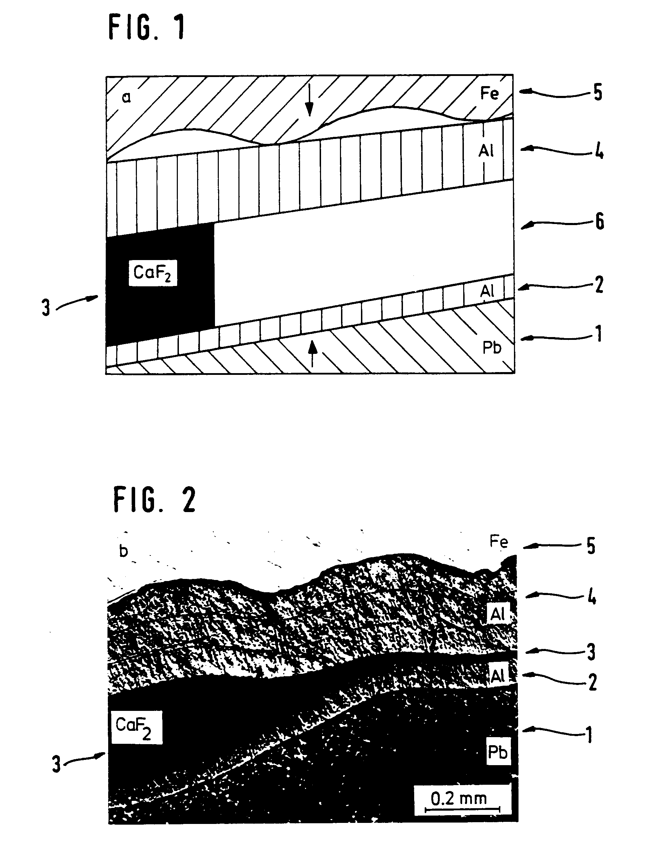

Die Verformungseinrichtung nach Fig. 1 weist auf einem nicht dargestellten Preßtisch eine Unterlage 1 aus Blei, auf dieser eine aus einer Haushaltsfolie bestehende untere Aluminium-Lage 2, auf dieser eine Probe 3, darüber eine aus drei Haushaltsfolien bestehende obere Aluminium-Lage 4 und über dieser einen Preßstempel 5 mit einer gewellten, im ganzen runden, Preßfläche von 8 mm Durchmesser auf, mit dem eine Kraft von 2 t ausgeübt werden kann.

Die Probe 3 besteht aus einem flachen, quadratischen Plättchen aus nanokristallinem CaF₂.

Fig. 2 zeigt den Zustand nach einer Pressung bei 80°C. Die Preßdauer betrug 1 Sekunde.

Die Probe ist in den vorher leeren, in Fig. 1 mit 6 bezeichneten Zwischenraum geflossen und hat eine entsprechend der Preßfläche des Stempels 5, durch die Aluminium-Lage 4 abgemildert, gewellte Oberfläche angenommen. Das ganze hat sich unter weiterer Biegung der Probe an der Unterseite in die untere Aluminium-Lage 2 und die Unterlage aus Blei eingedrückt.

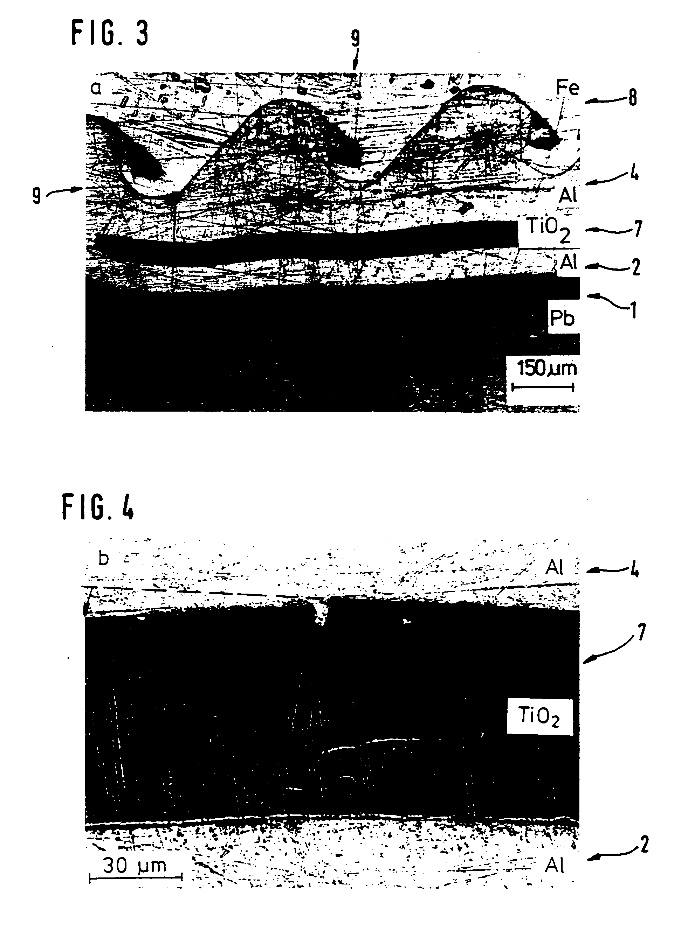

Fig. 3 zeigt den Zustand nach dem Pressen einer Probe 7 von etwa gleicher Form aus nanokristallinem TiO₂ mit einem etwas tiefer gewellten Preßstempel 8, an dem noch Grate 9 vom Einfräsen der Wellen verblieben sind. Die Pressung wurde durchgeführt bei 180°C, wiederum mit einer Dauer von 1 Sekunde:
Die vorher ebene Probe ist gewellt. Die Wellung ist im Vergleich zu derjenigen des Preßstempels recht flach, weil die zur Polsterung eingefügte Aluminium-Lage 4 sich weitgehend in die Wellentäler hinein verformt und sie ausgefüllt hat.

Besonders augenfällig ist die Duktilität der Probe 7 in Fig. 4, die einen Spalt 10 in der Probe vergrößert zeigt:
Der Spalt war vor der Verformung ein bloßer Riß. Dieser Riß ist zu dem Spalt auseinandergezogen worden, die Oberfläche ist, wie durch die gestrichelte Linie und den Pfeil angedeutet, abgewinkelt worden. Trotz der extremen Kerbwirkung am inneren Ende des Risses bzw. Spaltes ist das Blättchen nicht auf seiner Restdicke durchgerissen.

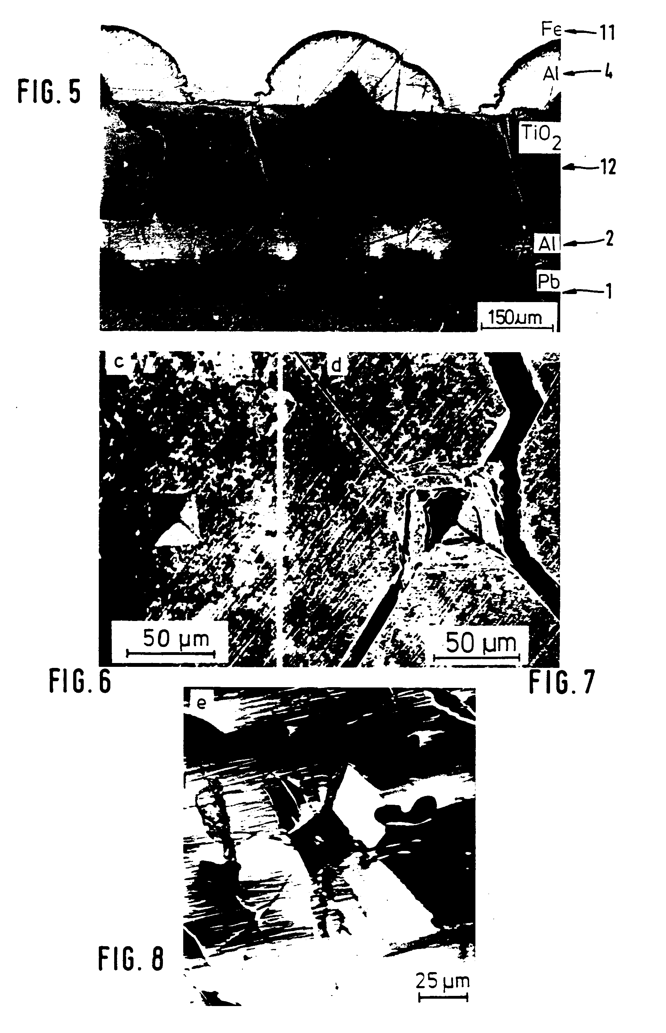

Fig. 5 zeigt einen etwa in gleicher Weise mit einem Preßstempel 11 behandelten flachen Einkristall 12 aus TiO₂. Er ist mehrfach durchgebrochen.

Der in Fig. 6 erkennbare pyramidenförmige Eindruck eines Diamanten in eine Probe aus nanokristallinem TiO₂ ist bei Raumtemperatur erzeugt worden mit einer Belastungssteigerung während 10 Sekunden auf 2 N. Die Umgebung des Eindruckes weist keine submikroskopischen Risse auf, wie durch akustische Mikroskopie ermittelt werden konnte. Die Härte ergibt sich als 250 HV.

Fig. 7 zeigt das Ergebnis eines gleichen Versuches wie Fig. 6, jedoch mit einer auf 1 Sekunde verkürzten Laststeigerung. Das Material ist um den pyramidenförmigen Eindruck herum vielfach gebrochen. Die Verformungsrate überstieg hier die Kriechrate.

Fig. 8 zeigt schließlich das Ergebris eines gleichen Versuches wie Fig. 6, jedoch an einem herkömmlichen Polykristall aus TiO₂ und mit einer Endlast von 5 N. Die Probe ist, auch in weiterer Entfernung von dem Eindruck (Pfeil), vielfach gebrochen. Die dunklen Felder gehören zu schräg liegenden Bruchstücken, die das Licht nicht in das Mikroskop reflektiert haben. Die Härte ergibt sich als 800 HV.

## Patentansprüche (Patentansprüche für folgende(n) Vertragsstaat(en): AT, CH, FR, LI, LU, SE)

1. Verfahren zum Herstellen eines keramischen Werkstoffes für eine Verwendung unter Beanspruchung auf Duktilität oder Zähigkeit,
dadurch gekennzeichnet,
daß der Werkstoff aus einem an sich spröden Material von einer Korngröße unter 30 Nanometern gesintert wird.

2. Verwendung eines pulvermetallurgischen Werkstoffes, der aus einem an sich spröden Material von einer Korngröße unter 30 Nanometern gesintert wird, für Zwecke mit erhöhter Beanspruchung auf Duktilität oder Zähigkeit.

3. Verfahren nach Anspruch 1,
dadurch gekennzeichnet,
daß der Werkstoff aus einem Material von einer Korngröße unter 20 Nanometern, vorzugsweise unter 15 Nanometern, gesintert wird.

4. Verfahren bzw. Verwendung nach einem der Ansprüche 1 bis 3,
dadurch gekennzeichnet,
daß der Werkstoff in Form eines Gegenstands oder Teilgegenstands hergestellt wird, der als Enderzeugnis bei seiner Verwendung auf Duktilität oder Zähigkeit beansprucht wird.

5. Verfahren bzw. Verwendung nach einem der Ansprüche 1 bis 3,
dadurch gekennzeichnet,
daß der Werkstoff in Form eines Vorkörpers als Zwischenerzeugnis hergestellt und dieser zu einem Gegenstand oder Teilgegenstand plastisch verformt wird.

6. Verfahren bzw. Verwendung nach Anspruch 4 oder 5,
dadurch gekennzeichnet,
daß der mit einem Teilgegenstand zusammengehörige übrige Teil des Gegenstands aus anderem keramischen bzw. pulvermetallurgischen Werkstoff besteht.

7. Verfahren bzw. Verwendung nach Anspruch 4 oder 5,
dadurch gekennzeichnet,
daß der Gegenstand nach seiner Formgebung teilweise einer kornvergrößernden Behandlung, insbesondere beschränkt auf eine Oberflächenschicht, unterzogen wird.

8. Verfahren bzw. Verwendung nach Anspruch 5,
dadurch gekennzeichnet,
daß der Gegenstand oder Teilgegenstand nach der plastischen Verformung vollständig einer kornvergrößernden Behandlung unterzogen wird.

9. Verfahren bzw. Verwendung nach einem der Ansprüche 5 bis 8,
dadurch gekennzeichnet,
daß der Vorkörper bei einer Temperatur unterhalb 300°C, vorzugsweise unterhalb 200°C, plastisch verformt wird.

10. Verfahren bzw. Verwendung nach einem der Ansprüche 1 bis 9,
dadurch gekennzeichnet,
daß das genannte Material, ggf. stellenweise, aus einer Mischung besteht.

11. Keramischer Gegenstand, hergestellt nach einem der Ansprüche 1 oder 3 bis 10.

## Patentansprüche (Patentansprüche für folgende(n) Vertragsstaat(en): BE, DE, ES, GB, GR, IT, NL)

1. Verfahren zum Herstellen eines keramischen oder pulvermetallurgischen Werkstoffes für eine Verwendung unter Beanspruchung auf Duktilität oder Zähigkeit,
dadurch gekennzeichnet,
daß der Werkstoff aus einem an sich spröden Material von einer Korngröße unter 30 Nanometern gesintert wird.

2. Verfahren nach Anspruch 1,
dadurch gekennzeichnet,
daß der Werkstoff aus einem Material von einer Korngröße unter 20 Nanometern, vorzugsweise unter 15 Nanometern, gesintert wird.

3. Verfahren nach Anspruch 1 oder 2,
dadurch gekennzeichnet,
daß der Werkstoff in Form eines Gegenstands oder Teilgegenstands hergestellt wird, der als Enderzeugnis bei seiner Verwendung auf Duktilität oder Zähigkeit beansprucht ist.

4. Verfahren nach Anspruch 1 oder 2,
dadurch gekennzeichnet,
daß der Werkstoff in Form eines Vorkörpers als Zwischenerzeugnis hergestellt und dieser zu einem Gegenstand oder Teilgegenstand plastisch verformt wird.

5. Verfahren nach Anspruch 3 oder 4,
dadurch gekennzeichnet,
daß der mit dem Teilgegenstand zusammengehörige übrige Teil des Gegenstands aus anderem keramischen Werkstoff besteht.

6. Verfahren nach Anspruch 3 oder 4,
dadurch gekennzeichnet,
daß der Gegenstand nach seiner Formgebung teilweise einer kornvergrößernden Behandlung, insbesondere beschränkt auf eine Oberflächenschicht, unterzogen wird.

7. Verfahren nach Anspruch 4,
dadurch gekennzeichnet,
daß der Gegenstand oder Teilgegenstand nach der plastischen Verformung vollständig einer kornvergrößernden Behandlung unterzogen wird.

8. Verfahren nach einem der Ansprüche 4 bis 7,
dadurch gekennzeichnet,
daß der Vorkörper bei einer Temperatur unterhalb 300°C, vorzugsweise unterhalb 200°C, plastisch verformt wird.

9. Verfahren nach einem der Ansprüche 1 bis 8,
dadurch gekennzeichnet,
daß das genannte Material, ggf. stellenweise, aus einer Mischung besteht.

10. Keramischer oder pulvermetallurgischer Gegenstand, hergestellt nach einem der Ansprüche 1 bis 9.

## Claims (Claims for the following Contracting State(s): AT, CH, FR, LI, LU, SE)

1. Method for the manufacture of a ceramic material for an application subject to stress calling for ductility or toughness,
characterized in that
the material is sintered from a naturally brittle material having a grain size of less than 30 nanometres.

2. Use of a powder metallurgical material, which is sintered from a naturally brittle material having a grain size of less than 30 nanometres, for purposes with increased stress calling for ductility or toughness.

3. Method according to Claim 1,
characterized in that
the material is sintered from a material having a grain size of less than 20 nanometres, and preferably of less than 15 nanometres.

4. Method or use according to one of the Claims 1 to 3,
characterized in that
the material is manufactured in the form of an object or component part of an object which, when used as an end product, is subjected to stress calling for ductility or toughness.

5. Method or use according to one of the Claims 1 to 3,
characterized in that
the material is manufactured in the form of a blank as an intermediate product, and that this is worked by plastic deformation to produce an object or a component part of an object.

6. Method or use according to Claim 4 or 5,
characterized in that
the other part of the object which matches the component part of the object consists of other ceramic or powder metallurgical material.

7. Method or use according to Claim 4 or 5,
characterized in that
the object, after forming, is subjected in part to a grain-enlarging process which is restricted in particular to a surface layer.

8. Method or use according to Claim 5,
characterized in that
the object or the component part of the object, after plastic deformation, is subjected in its entirety to a grain-enlarging process.

9. Method or use according to one of the Claims 5 to 8,
characterized in that
the blank is subjected to plastic deformation at a temperature below 300°C, and preferably below 200°C.

10. Method or use according to one of the Claims 1 to 9,
characterized in that
the aforementioned material, where appropriate in places, consists of a mixture.

11. A ceramic object manufactured according to one of the Claims 1 or 3 to 10.

## Claims (Claims for the following Contracting State(s): BE, DE, ES, GB, GR, IT, NL)

1. Method for the manufacture of a ceramic or powder metallurgical material for an application subject to stress calling for ductility or toughness,
characterized in that
the material is sintered from a naturally brittle material having a grain size of less than 30 nanometres.

2. Method according to Claim 1,
characterized in that
the material is sintered from a material having a grain size of less than 20 nanometres, and preferably of less than 15 nanometres.

3. Method according to Claim 1 or 2,
characterized in that
the material is manufactured in the form of an object or component part of an object which, when used as an end product, is subjected to stress calling for ductility or toughness.

4. Method according to Claim 1 or 2,
characterized in that
the material is manufactured in the form of a blank as an intermediate product, and that this is worked by plastic deformation to produce an object or a component part of an object.

5. Method according to Claim 3 or 4,
characterized in that
the other part of the object which matches the component part of the object consists of other ceramic material.

6. Method according to Claim 3 or 4,
characterized in that
the object, after forming, is subjected in part to a grain-enlarging process which is restricted in particular to a surface layer.

7. Method according to Claim 4,
characterized in that
the object or the component part of the object, after plastic deformation, is subjected in its entirety to a grain-enlarging process.

8. Method according to one of the Claims 4 to 7,
characterized in that
the blank is subjected to plastic deformation at a temperature below 300°C, and preferably below 200°C.

9. Method according to one of the Claims 1 to 8,
characterized in that
the aforementioned material, where appropriate in places, consists of a mixture.

10. A ceramic or powder metallurgical object manufactured according to one of the Claims 1 to 9.

## Revendications (Revendications pour l'(les) Etat(s) contractant(s) suivant(s): AT, CH, FR, LI, LU, SE)

1. Procédé de fabrication d'un matériau céramique pour une utilisation mettent on cause la ductilité ou la tenacité, caractérisé en ce que le matériau cet obtenu par frittage à partir d'un metériau fragile par lui-même ayant une granulométrie inférieure à 30 nanomètres.

2. Utilisation d'un metériau obtenu par la métallurgie des poudres qui est fabriqué par frittage à partir d'un matériau fragile par lui-même ayant une granulométrie inférieure à 30 nanomètres, cette utilisation mettant en cause la ductilité ou la ténacité dans des conditions sévères.

3. Procédé selon la revendication 1, caractérisé en ce que le matériau est produit par frittage à pertir d'un metériau ayant une granulométrie inférieure à 20 namomètres, de préférence inférieure à 15 nanomètres.

4. Procédé ou utilisation selon une des revendications 1 à 3, caractérisés en ce que le matériau est fabriqué sous la forme d'un objet ou d'une partie d'objet constituant un produit fini dont l'utilisation met en cause la ductilité ou la ténacité.

5. Procédé ou utilisation selon une des revendications 1 à 3, caractérisé en ce que le matériau est fabriqué sous la forme d'une ébauche constituant un produit intermédiaire qui est ensuite déformé plastiquement pour la réalisation d'un objet ou d'une partie d'objet.

6. Procédé ou utilisation selon l'une des revendications 4 ou 5, caractérisés en ce que le reste de l'objet complétant une partie d'objet est constitué par un autre metériau céramique ou obtenu par la métallurgie des poudres.

7. Procédé ou utilisation selon l'une des revendications 4 ou 5, caractérisés en ce que l'objet obtenu est, après son moulage, soumis en partie à un traitement provoquant le grossissement du grain et limité notamment à une couche superficielle.

8. Procédé ou utilisation selon la revendication 5, caractérisés en ce que l'objet ou la partie d'objet est , après la déformation plastique, entièrement soumis à un traitement provoquant le grossissement du grain.

9. Procédé ou utilisation selon une des revendications 5 à 8, caractérisés en ce que l'ébauche est déformée plastiquement à une température inférieure à 300°C, de préférence inférieure à 200°C.

10. Procédé ou utilisation selon une des revendications 1 à 9, caractérisés en ce que le matériau en question cet constitué, le cas échéant en partie, par un mélange.

11. Objet en matériau céramique fabriqué selon une des revendications 1 ou 3 à 10.

## Revendications (Revendications pour l'(les) Etat(s) contractant(s) suivant(s): BE, DE, ES, GB, GR, IT, NL)

1. Procédé de fabrication d'un metériau céramique ou produit par la métallurgie des poudres pour une utilisation mettant en cause la ductilité ou la ténacité, caractérisé en ce que ce matériau est obtenu par frittage à partir d'un matériau fragile par lui-même ayant une granulométrie inférieure à 30 nanomètres.

2. Procédé selon la revendication 1, caractérisé en ce que le matériau est obtenu par frittage à partir d'un matériau ayant une granulométrie inférieure à 20 nanomètres, de préférence inférieure à 15 nanomètres.

3. Procédé selon l'une des revendications 1 ou 2, caractérisé en ce que le matériau est fabriqué sous la forme d'un objet ou d'une partie d'objet constituant un produit fini, dont l'utilisation met en cause la ductilité ou la ténacité.

4. Procédé selon l'une des revendications 1 ou 2, caractérisé en ce que le matériau est fabriqué sous la forme d'une ébauche constituant un produit intermédiaire qui est ensuite déformé plastiquement pour la réalisation d'un objet ou d'une partie d'objet.

5. Procédé selon l'une des revendications 3 ou 4, caractérisé en ce que le reste de l'objet complétant une partie d'objet est constitué par un autre matériau céramique.

6. Procédé selon l'une des revendications 3 ou 4, caractérisé en ce que l'objet obtenu est, après son moulage, soumis en partie à un traitement provoquant le grossissement du grain et limité notamment à une couche superficielle.

7. Procédé selon la revendication 4, caractérisé en ce que l'objet ou la partie d'objet est , après la déformation plastique, entièrement soumis à un traitement provoquant le grossissement du grain.

8. Procédé suivant une des revendications 4 à 7 , caractérisé en ce que l'ébauche est déformée plastiquement à une température inférieure à 300°C, de préférence inférieure à 200°C.

9. Procédé selon une des revendications 1 à 8, caractérisé en ce que le matériau en question est constitué, le cas échéant en partie, par un mélange.

10. Objet en matériau céramique ou produit par la métallurgie des poudres fabriqué selon une des revendications 1 à 9.
